# EUROPEAN PATENT APPLICATION

(11) **EP 4 287 675 A1**
(43) Date of publication of application: **06.12.2023**
(21) Application number: 21921724.7
(22) Date of filing: 26.01.2021
(51) Int. Cl.: H04W 12/08

(54) **APPLICATION FUNCTION SESSION PROCESSING METHOD, APPLICATION FUNCTION SESSION PROCESSING APPARATUS, AND STORAGE MEDIUM**

(71) Applicant: Beijing Xiaomi Mobile Software Co., Ltd., Beijing 100085 (CN)
(72) Inventor: CHEN, Dong, Beijing 100085 (CN); YU, Lei, Beijing 100085 (CN)
(74) Representative: Gunzelmann, Rainer
(86) International application number: PCT/CN2021/073848
(87) International publication number: WO 2022/160104

(57) **Abstract**

The present disclosure relates to an application function session processing method, an application function session processing apparatus, and a storage medium. The application function session processing method comprises: sending a first request, the first request being used for requesting to reserve a resource for an application function session, the first request comprising parametric information of a terminal group, and the terminal group comprising one or more terminals. Multi-modal AF session establishment can be implemented by means of the present disclosure.

## Description

### TECHNICAL FIELD

The disclosure relates to the field of wireless communication technology, in particular to a method for processing an application function (AF) session, an apparatus for processing an AF session and a storage medium.

### BACKGROUND

With the development of artificial intelligence, multi-modal interaction and multi-modal machine learning have become important research areas. Multi-modal technology needs to integrate and process multi-modal information to achieve better interaction experience.

In the related art, when processing multi-modal data, the multi-modal data can be used as an application, and collaborative processing of multiple protocol data unit (PDU) sessions of multiple modalities can be performed at the application layer. When processing the multi-modal data at the application layer, a quality of service (QoS) requirement of each modality may be dynamically adjusted based on collaboration between a network condition and the QoS requirements of various applications. However, the application layer may fails to have the function of dynamically adjusting to satisfy the QoS requirements of the multi-modal data, and it may have to interact with the 3rd Generation Partnership Project (3GPP) network to realize this. However, the 3GPP network may not be able to satisfy the QoS requirements of the multi-modal data.

### SUMMARY

To overcome the problems in the related art, the disclosure provides a method for processing an application function (AF) session, an apparatus for processing an AF session and a storage medium.

According to a first aspect of the embodiments of the disclosure, a method for processing an AF session, performed by a first network device, is provided. The method includes: sending a first request, the first request being configured to request to reserve a resource for an AF session, the first request including parameter information of a group of user equipments (UEs), and the group of UEs including one or more UEs.

In an implementation, the first request is carried in a request for creating an application function session with quality.

In an implementation, the parameter information of the group of UEs includes at least one of:
addresses list of the group of UEs;
one or more flow descriptions mapped to the group of UEs; and
quality of service (QoS) references mapped to the group of UEs.

In an implementation, the parameter information of the group of UEs includes an alternative service requirement, and the alternative service requirement includes one or more QoS reference parameter sets mapped to the group of UEs.

According to a second aspect of the embodiments of the disclosure, a method for processing an AF session, performed by a second network device, is provided. The method includes: obtaining a first request, the first request being configured to request to reserve a resource for an AF session, the first request including parameter information of a group of UEs, and the group of UEs including one or more UEs.

In an implementation, the first request is carried in a request for creating an application function session with QoS.

In an implementation, the method includes: performing authorization on the request for creating an application function session with QoS mapped to the group of UEs.

In an implementation, the method includes: in response to the authorization of the request for creating an application function session with QoS being successful, sending an application policy authorization request for performing authorization on the request for creating an application function session with QoS, the application policy authorization request including the parameter information of the group of UEs.

In an implementation, the method includes: receiving an application policy authorization response mapped to the group of UEs.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

According to a third aspect of the embodiments of the disclosure, a method for processing an AF session, performed by a third network device, is provided. The method includes:

obtaining an application policy authorization request, the application policy authorization request being configured to request for performing authorization on a request for creating an application function session with QoS, the application policy authorization request including parameter information of a group of UEs, and the group of UEs including one or more UEs.

In an implementation, the method includes: in response to the authorization being successful, determining a QoS parameter set mapped to the group of UEs.

In an implementation, the application policy authorization request includes an alternative service requirement, and the alternative service requirement included one or more QoS reference parameter sets mapped to the group of UEs.

In an implementation, the method includes: in response to the authorization being successful, determining a QoS parameter set from the one or more QoS reference parameter sets.

In an implementation, the method includes: sending an application policy authorization response mapped to the group of UEs.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

According to a fourth aspect of the embodiments of the disclosure, an apparatus for processing an AF session, performed by a first network device, is provided. The apparatus includes:

a sending unit, configured to send a first request, the first request being configured to request to reserve a resource for an AF session, the first request including parameter information of a group of UEs, and the group of UEs including one or more UEs.

In an implementation, the first request is carried in a request for creating an application function session with quality.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

According to a fifth aspect of the embodiments of the disclosure, an apparatus for processing an AF session, performed by a second network device, is provided. The apparatus includes:

a receiving unit, configured to obtain a first request, the first request being configured to request to reserve a resource for an AF session, the first request including parameter information of a group of UEs, and the group of UEs including one or more UEs.

In an implementation, the first request is carried in a request for creating an application function session with QoS.

In an implementation, the receiving unit is configured to: perform authorization on the request for creating an application function session with QoS mapped to the group of UEs.

In an implementation, the apparatus includes a sending unit, configured to: in response to the authorization of the request for creating an application function session with QoS being successful, send an application policy authorization request for performing the authorization on the request for creating an application function session with QoS, the application policy authorization request including the parameter information of the group of UEs.

In an implementation, the receiving unit is configured to: receive an application policy authorization response mapped to the group of UEs.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

According to a sixth aspect of the embodiments of the disclosure, an apparatus for processing an AF session, performed by a third network device, is provided. The apparatus includes:
a receiving unit, configured to obtain an application policy authorization request, the application policy authorization request being configured to request for performing authorization on a request for creating an application function session with QoS, the application policy authorization request including parameter information of a group of UEs, and the group of UEs including one or more UEs.

In an implementation, the receiving unit is configured to: in response to the authorization being successful, determine a Qos parameter set mapped to the group of UEs.

In an implementation, the application policy authorization request includes an alternative service requirement, and the alternative service requirement includes one or more QoS reference parameter sets mapped to the group of UEs.

In an implementation, the obtaining unit is configured to: in response to the authorization being successful, determine a QoS parameter set from the one or more QoS reference parameter sets.

In an implementation, the apparatus includes: a sending unit, configured to: send an application policy authorization response mapped to the group of UEs.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

According to a seventh aspect of the embodiments of the disclosure, a device for processing an AF session is provided. The device includes:
a processor; and a memory for storing instructions executable by the processor; in which
the processor is configured to perform the method for processing an AF session of the first aspect or any implementation of the first aspect.

According to an eighth aspect of the embodiments of the disclosure, a device for processing an AF session is provided. The device includes:
a processor; and a memory for storing instructions executable by the processor; in which
the processor is configured to perform the method for processing an AF session of the second aspect or any implementation of the second aspect.

According to a ninth aspect of the embodiments of the disclosure, a device for processing an AF session is provided. The device includes:
a processor; and a memory for storing instructions executable by the processor; in which
the processor is configured to perform the method for processing an AF session of the third aspect or any implementation of the third aspect.

According to a tenth aspect of the embodiments of the disclosure, a non-transitory computer readable storage medium having instructions stored thereon is provided. When the instructions in the storage medium are executed by a processor, a network device is caused to perform the method for processing an AF session of the first aspect or any implementation of the first aspect.

According to an eleventh aspect of the embodiments of the disclosure, a non-transitory computer readable storage medium having instructions stored thereon is provided. When the instructions in the storage medium are executed by a processor, a network device is caused to perform the method for processing an AF session of the second aspect or any implementation of the second aspect.

According to a twelfth aspect of the embodiments of the disclosure, a non-transitory computer readable storage medium having instructions stored thereon is provided. When the instructions in the storage medium are executed by a processor, a network device is caused to perform the method for processing an AF session of the third aspect or any implementation of the third aspect.

The technical solutions provided by the embodiments of the disclosure may include following beneficial effects. The first request for requesting to reserve the resource for the AF session includes the parameter information of the group of UEs. The group of UEs include one or more UEs. The multi-modal parameter information of all the UEs can be sent to the network together, to realize the establishment of multi-modal AF sessions.

It should be understood that the above general description and the following detailed descriptions are exemplary and explanatory only, and do not limit the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the disclosure.
FIG. 1 is a schematic diagram of a radio communication system according to an exemplary embodiment.
FIG. 2 is a flowchart of a method for processing an AF session according to an exemplary embodiment.
FIG. 3 is a flowchart of a method for processing an AF session according to an exemplary embodiment.
FIG. 4 is a flowchart of a method for processing an AF session according to an exemplary embodiment.
FIG. 5 is a flowchart of a method for processing an AF session according to an exemplary embodiment.
FIG. 6 is a flowchart of a method for processing an AF session according to an exemplary embodiment.
FIG. 7 is a flowchart of a method for processing an AF session according to an exemplary embodiment.
FIG. 8 is a flowchart of a method for processing an AF session according to an exemplary embodiment.
FIG. 9 is a flowchart of a method for processing an AF session according to an exemplary embodiment.
FIG. 10 is a flowchart of a method for processing an AF session according to an exemplary embodiment.
FIG. 11 is a flowchart of a method for processing an AF session according to an exemplary embodiment.
FIG. 12 is a block diagram of an apparatus for processing an AF session according to an exemplary embodiment.
FIG. 13 is a block diagram of an apparatus for processing an AF session according to an exemplary embodiment.
FIG. 14 is a block diagram of an apparatus for processing an AF session according to an exemplary embodiment.
FIG. 15 is a block diagram of a device for processing an AF session according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with some aspects related to the disclosure as recited in the appended claims.

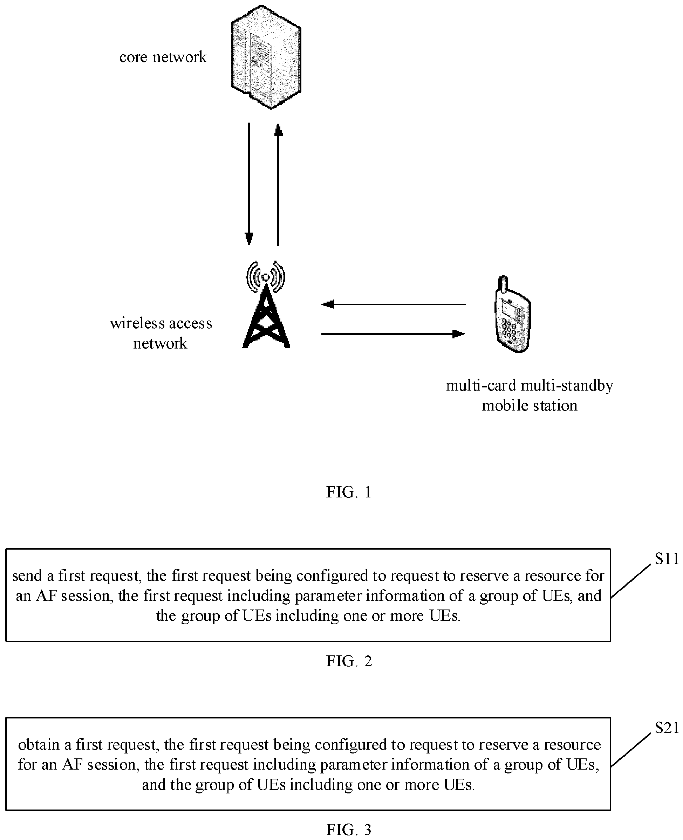

The disclosure provides a method for processing an application function (AF) session that can be performed by a radio communication system shown in FIG. 1. As illustrated in FIG. 1, a mobile station (MS) is connected to a radio access network (RAN) through a RAN network device such as a base station. The RAN network device completes backward and forward transmission of data with a core network (CN) network device, to perform various communication services.

It is understood that the radio communication system is a network that provides a wireless communication function. The radio communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. Depending on factors such as the capacity, rate, and latency of the different networks, the networks can be classified as a second generation (2G) network, a 3G network, a 4G network, or a future evolved network, such as a 5G network, which can also be called a new radio (NR) network. For easy of description, this disclosure sometimes refers to the radio communication network simply as a network or a system. The network in the disclosure may include a RAN and a CN. The network includes a network device, which may be, for example, a RAN node, a CN device, etc. The RAN node may also be referred to as a base station. The network can provide network services for UEs through the network device. Different operators can provide different network services for the UEs, and it can also be understood that different operators have different operator networks.

The MS can also be called UE, a terminal, or a mobile terminal (MT), which is a device that provides voice and/or data connectivity to users. For example, the terminal can be a handheld device with a wireless connection function, a vehicle-mounted device, etc. Currently, some examples of the terminal are a mobile phone, a pocket personal computer (PPC), a handheld computer, a personal digital assistant (PDA), a laptop, a tablet computer, a wearable device, or an in-vehicle device, etc.

In the related art, multi-modal technology is supported. Multi-modal technology aims to integrate and process multi-modal information to obtain better interactive experience and stronger machine learning capabilities. Each specific type of information or representation of information storage can be called a modality. For example, a people's sense such as touch, hearing, vision or smell, multimedia data describing the same object, or a medium of data information of the same type from different sensors can all be called a modality. Broadly speaking, two different languages can also be regarded as two modalities, and even data sets collected in two different situations can also be considered as two modalities.

The network currently defined by the 3GPP processes multi-modal information as application layer data, and collaboration between modalities is processed at the application layer. For example, the multi-modality is treated as an application, and multiple PDU sessions of multiple modalities can be collaboratively processed at the application layer.

When processing the multi-modal data at the application layer, the application layer may dynamically adjust a quality of service (QoS) requirement of each modality by collaborating QoS requirements of multiple applications based on a network condition. However, not all application layers have this capability. In addition, even if the application layer has this function, it requires multiple interactions between the application layer and the 3GPP network layer to adjust the QoS collaboration. The 3GPP network does not intervene in the multi-modal data processing, and depending on the actual condition of the network, the 3GPP network cannot be able to satisfy the QoS requirements of the multi-modal data.

In the embodiment of the disclosure, the multi-modal QoS requirements of all terminals are sent to the network together via the AF. That is, the multi-modal QoS requirements of all terminals are sent to a policy control function (PCF) through a network exposure function (NEF) for the PCF to perform policy control uniformly, to satisfy the multi-modal QoS requirements.

An embodiment of the disclosure provides a method for processing a multi-modal AF session, in which the processing of multi-modal AF sessions is supported, to satisfy the multi-modal QoS parameter settings of a group of UEs. The group of UEs may include one or more UEs.

FIG. 2 is a flowchart of a method for processing an AF session according to an exemplary embodiment. As illustrated in FIG. 2, the method is performed by a first network device, which may be, for example, an AF. The method includes the following steps.

At step S11, a first request is sent, the first request being configured to request to reserve a resource for an AF session, the first request including parameter information of a group of UEs, and the group of UEs including one or more UEs.

In the method for processing an AF session provided in the embodiment of the disclosure, the first request is carried in a request for creating an application function session with quality, e.g., a Nnef_AFsessionWithQoS_Create request, to support an establishment process of multi-modal AF sessions.

In the method for processing an AF session provided in the embodiment of the disclosure, the group of UEs included in the first request may be a group of UEs that support multimodality.

In the method for processing an AF session provided in the embodiment of the disclosure, the parameter information of the group of UEs in the first request includes at least one of: addresses list of the group of UEs; one or more flow descriptions mapped to the group of LTEs; and QoS references mapped to the group of UEs.

In an implementation, in the method for processing an AF session provided in the embodiment of the disclosure, the parameter information of the group of UEs includes an alternative service requirement, and the alternative service requirement includes one or more QoS reference parameter sets mapped to the group of UEs. The one or more QoS reference parameter sets mapped to the group of UEs may be one or more groups of QoS reference parameters mapped to the group of UEs in a prioritized order.

In the method for processing an AF session provided in the embodiment of the disclosure, the parameter information of the group of UEs in the first request may also include an AF identifier.

In the method for processing an AF session provided in the embodiment of the disclosure, the parameter information of the group of UEs in the first request may also include a period of time or a traffic volume for a requested QoS.

In the embodiment of the disclosure, the first network device is an AF, and the Nnef_AFsessionWithQoS_Create request sent by the AF to the NEF includes the parameter information of a group of UEs. The NEF assigns a transaction reference ID to the AF.

FIG. 3 is a flowchart of a method for processing an AF session according to an exemplary embodiment. As illustrated in FIG. 3, the method is performed by a second network device, which may be, for example, a NEF. The method includes the following steps.

At step S21, a first request is obtained, the first request being configured to request to reserve a resource for an AF session, the first request including parameter information of a group of UEs, and the group of UEs including one or more UEs.

In the method for processing an AF session provided in the embodiment of the disclosure, the first request is carried in a Nnef_AFsessionWithQoS_Create request, to support an establishment process of multi-modal AF sessions.

In the method for processing an AF session provided in the embodiment of the disclosure, the group of UEs included in the first request may be a group of UEs that support multimodality.

In the method for processing an AF session provided in the embodiment of the disclosure, the parameter information of the group of UEs in the first request includes at least one of: addresses list of the group of UEs; one or more flow descriptions mapped to the group of UEs; and QoS references mapped to the group of UEs.

In an implementation, in the method for processing an AF session provided in the embodiment of the disclosure, the parameter information of the group of UEs includes an alternative service requirement, and the alternative service requirement includes one or more QoS reference parameter sets mapped to the group of UEs. The one or more QoS reference parameter sets mapped to the group of UEs may be one or more groups of QoS reference parameters mapped to the group of UEs in a prioritized order.

In the method for processing an AF session provided in the embodiment of the disclosure, the parameter information of the group of UEs in the first request may also include an AF identifier.

In the method for processing an AF session provided in the embodiment of the disclosure, the parameter information of the group of UEs in the first request may also include a period of time or a traffic volume for a requested QoS.

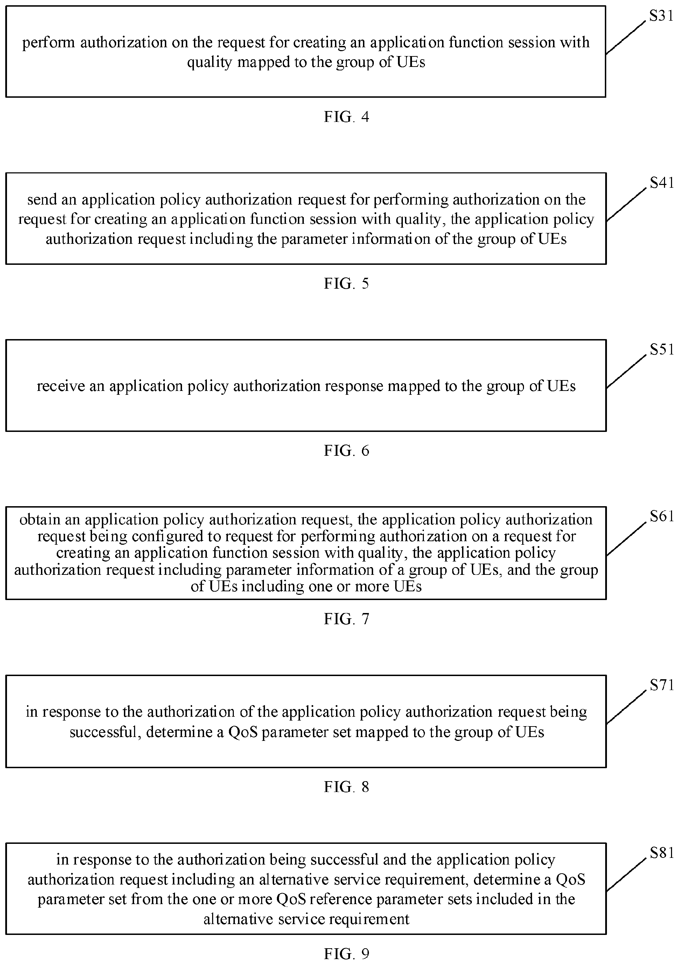

FIG. 4 is a flowchart of a method for processing an AF session according to an exemplary embodiment. As illustrated in FIG. 4, the method is performed by a second network device, which may be, for example, a NEF. The method includes the following steps.

At step S31, authorization is performed on the Nnef_AFsessionWithQoS_Create request mapped to the group of UEs.

In the method for processing an AF session provided in the embodiment of the disclosure, in response to the authorization of the Nnef_AFsessionWithQoS_Create request being successful, an application policy authorization request, e.g., a Npcf_PolicyAuthorization_Create request, for performing the authorization on the Nnef_AFsessionWithQoS_Create request is sent, the application policy authorization request including the parameter information of the group of UEs.

FIG. 5 is a flowchart of a method for processing an AF session according to an exemplary embodiment. As illustrated in FIG. 5, the method is performed by a second network device, which may be, for example, a NEF. The method includes the following steps.

At step S41, the application policy authorization request for performing the authorization on the Nnef_AFsessionWithQoS_Create request is sent, the application policy authorization request including the parameter information of the group of UEs.

In an implementation, the parameter information of the group of UEs in the application policy authorization request includes at least one of: addresses list of the group of UEs; one or more flow descriptions mapped to the group of UEs; and QoS references mapped to the group of UEs.

In an implementation, the parameter information of the group of UEs in the application policy authorization request includes an alternative service requirement, and the alternative service requirements include one or more QoS reference parameter sets mapped to the group of UEs.

In the method for processing an AF session provided in the embodiment of the disclosure, the parameter information of the group of UEs in the application policy authorization request may also include an AF identifier.

In the method for processing an AF session provided in the embodiment of the disclosure, the parameter information of the group of UEs in the application policy authorization request may also include a period of time or a traffic volume for a requested QoS.

FIG. 6 is a flowchart of a method for processing an AF session according to an exemplary embodiment. As illustrated in FIG. 6, the method is performed by a second network device, which may be, for example, a NEF. The method includes the following steps.

At step S51, an application policy authorization response mapped to the group of UEs is received.

In the embodiment of the disclosure, the application policy authorization response may be sent by a PCF to the NEF. The application policy authorization response may include an authorization result of the PCF performing the authorization of the Nnef_AFsessionWithQoS_Create request.

For example, in response to the authorization performed on the Nnef_AFsessionWithQoS_Create request by the PCF being successful, the application policy authorization response may include the QoS parameter sets mapped to the group of UEs.

For example, in response to the authorization performed on the Nnef_AFsessionWithQoS_Create request by the PCF being failed, the application policy authorization response may include an authorization failure message.

FIG. 7 is a flowchart of a method for processing an AF session according to an exemplary embodiment. As illustrated in FIG. 7, the method is performed by a third network device, which may be, for example, a PCF. The method includes the following steps.

At step S61, an application policy authorization request is obtained, the application policy authorization request being configured to request for performing authorization on a Nnef_AFsessionWithQoS_Create request, the application policy authorization request including parameter information of a group of UEs, and the group of UEs including one or more UEs.

In an implementation, the parameter information of the group of UEs in the application policy authorization request includes at least one of: addresses list of the group of UEs; one or more flow descriptions mapped to the group of UEs; and QoS references mapped to the group of UEs.

In an implementation, the parameter information of the group of UEs in the application policy authorization request includes an alternative service requirement, and the alternative service requirement includes one or more QoS reference parameter sets mapped to the group of UEs.

In the method for processing an AF session provided in the embodiment of the disclosure, the parameter information of the group of UEs in the application policy authorization request includes an AF identifier.

In the method for processing an AF session provided in the embodiment of the disclosure, the parameter information of the group of UEs in the application policy authorization request includes a period of time or a traffic volume for the requested QoS.

In the embodiment of the disclosure, the PCF receives an application policy authorization request, and performs authorization on the parameter information of the group of UEs in the Nnef_AFsessionWithQoS_Create request.

In response to the authorization performed on the parameter information of the group of UEs in the Nnef_AFsessionWithQoS_Create request by the PCF is successful, the PCF determines a QoS parameter mapped to the group of UEs.

In the embodiment of the disclosure, in response to the Nnef_AFsessionWithQoS_Create request being authorized, the PCF derives requested QoS parameters (mapped to the group of UEs) based on information provided by the NEF, and determines, based on PCF configuration for the AF, whether to allow the QoS parameters mapped to the group of UEs, and informs the NEF of the result.

In the method for processing an AF session provided in the embodiment of the disclosure, if the alternative service requirement is provided, the PCF determines an alternative QoS parameter set in the same prioritized order. The alternative QoS parameter set may be derived from one or more groups of QoS reference parameters contained in the alternative service requirement and mapped to the group of UEs. The alternative QoS parameter set may include a plurality of alternative QoS parameter sets.

FIG. 8 is a flowchart of a method for processing an AF session according to an exemplary embodiment. As illustrated in FIG. 8, the method is performed by a third network device, which may be, for example, a PCF. The method includes the following steps.

At step S71, in response to the authorization of the application policy authorization request being successful, a QoS parameter set mapped to the group of UEs is determined.

FIG. 9 is a flowchart of a method for processing an AF session according to an exemplary embodiment. As illustrated in FIG. 9, the method is performed by a third network device, which may be, for example, a PCF. The method includes the following steps.

At step S81, in response to the authorization being successful and the application policy authorization request including an alternative service requirement, a QoS parameter set is determined from one or more QoS reference parameter sets included in the alternative service requirement.

In the embodiment of the disclosure, in response to the authorization of the application policy authorization request being failed, the PCF may send an authorization failure notification to the NEF.

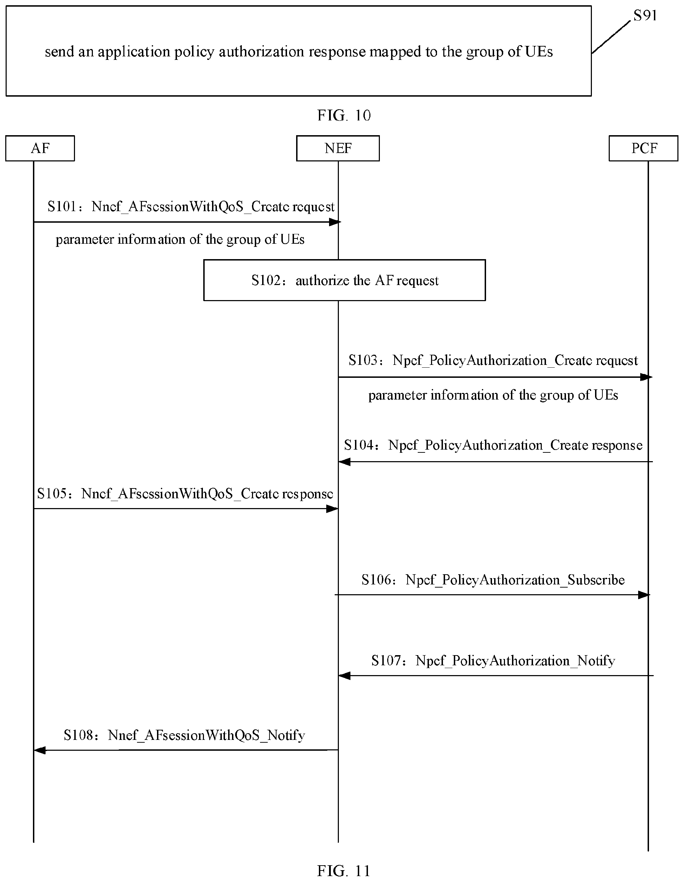

FIG. 10 is a flowchart of a method for processing an AF session according to an exemplary embodiment. As illustrated in FIG. 10, the method is performed by a third network device, which may be, for example, a PCF. The method includes the following steps.

At step S91, an application policy authorization response mapped to the group of UEs is sent.

In an implementation, the application policy authorization response may include a QoS parameter set mapped to the group of UEs.

In an implementation, the application policy authorization response may include a notification message of an application policy authorization failure.

The method for processing an AF session provided in the embodiment of the disclosure can be performed by the interaction among an AF, a NEF and a PCF, to implement the establishment process of AF sessions.

FIG. 11 is a flowchart of a method for processing an AF session according to an exemplary embodiment. As illustrated in FIG. 11, the method includes the following steps.

At step S101, an AF sends a request to reserve a resource for an AF session to a NEF via a Nnef_AFsessionWithQoS_Create request message.

The Nnef_AFsessionWithQoS_Create request message includes parameter information of a group of UEs. The parameter information of the group of UEs includes addresses list of the group of UEs, an AF identifier, a flow description or multiple flow description s mapped to the group of UEs, QoS references mapped to the group of UEs, and an alternative service request containing one or more groups of QoS reference parameters mapped to the group of UEs in a prioritized order. Optionally, the Nnef_AFsessionWithQoS_Create request message also includes a period of time or a traffic volume for a requested QoS.

The NEF receives the Nnef_AFsessionWithQoS_Create request message and assigns a transaction reference ID to the Nnef_AFsessionWithQoS_Create request.

At step S102, the NEF authorizes the AF request and can apply policies to control an overall amount of predefined QoSs that are authorized for the AF and mapped to the group of UEs.

If the authorization is not granted, steps S103 and S104 are skipped and the NEF replies the AF with a result value for indicating an authorization failure.

At step S103, the NEF interacts with the PCF by triggering an Npcf_PolicyAuthorization_Create request, and provides the addresses list of the group of UEs, the AF identifier, the flow description or the multiple flow description s mapped to the group of UEs, the QoS references mapped to the group of UEs, and the alternative service request containing one or more groups of QoS reference parameters mapped to the group of UEs in the prioritized order. The Npcf_PolicyAuthorization_Create request also includes any optional receiving time period or receiving traffic volume, and it is mapped to sponsored data connectivity information.

At step S104, the PCF determines whether the request is authorized and sends a Npcf_PolicyAuthorization_Create response.

If the request is authorized, the PCF derives the requested QoS parameters mapped to the group of UEs based on the information provided by the NEF, determines whether to allow the QoS parameters mapped to the group of UEs based on PCF configuration for the AF, and notifies the NEF of the result via the Npcf_PolicyAuthorization_Create response. In addition, if the alternative service request is provided, the PCF derives an alternative QoS parameter set from one or more groups of QoS reference parameters contained in the alternative service request and mapped to the group of UEs in the same prioritized order. For example, the alternative QoS parameter set may include a plurality of alternative QoS parameter sets.

If the request is not authorized, or the requested QoS is not allowed, the NEF responds to the AF by sending a result value that indicates a failure reason in step S105.

At step S105, the NEF sends a Nnef_AFsessionWithQoS_Create response message to the AF.

The Nnef_AFsessionWithQoS_Create response message includes a transaction result reference ID and a result. The result indicates whether the request is authorized or not.

At step S106, the NEF sends a Npcf_PolicyAuthorization_Subscribe message to the PCF to subscribe to a notification of a resource allocation status and subscribe to other events.

At step S107, when a condition of an event is satisfied, e.g., a success or failure of establishment of a transmission resource corresponding to the QoS, the PCF sends a Npcf_PolicyAuthorization_Notify message to notify the NEF of the event.

At step S108, the NEF sends a Nnef_AFsessionWithQoS_Notify message to the AF, and the Nnef_AFsessionWithQoS_Notify message is about the event reported by the PCF.

The method for processing an AF session provided in the embodiment of the disclosure can support the establishment process of multi-modal AF sessions.

Based on the same concept, the embodiment of the disclosure also provides an apparatus for processing an AF session.

It is understood that the apparatus for processing an AF session provided by the embodiments of the disclosure includes corresponding hardware structures and/or software modules that perform the respective functions to achieve the above functions. In combination with the units and algorithmic steps of each example disclosed in the embodiments of the disclosure, the embodiments of the disclosure can be implemented in the form of hardware or a combination of hardware and computer software. Whether a particular function is performed in the form of hardware or hardware driven by computer software depends on the particular application and design constraint conditions of the technical solution. Those skilled in the art may use a different approach for each particular application to implement the described function, but such implementation should not be considered as beyond the scope of the technical solution of the embodiments of the disclosure.

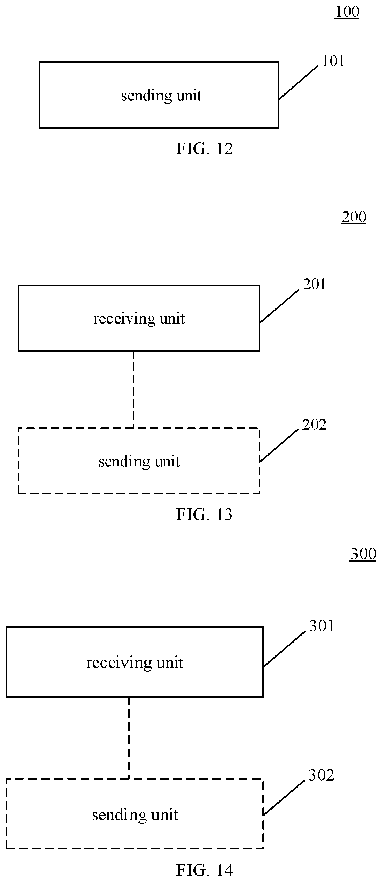

FIG. 12 is a block diagram of an apparatus for processing an AF session according to an exemplary embodiment. As illustrated in FIG. 12, the apparatus 100 for processing an AF session includes a sending unit 101.

The sending unit 101 is configured to send a first request, the first request being configured to request to reserve a resource for an AF session, the first request including parameter information of a group of UEs, and the group of UEs including one or more UEs.

In an implementation, the first request is carried in a request for creating an application function session with quality.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

FIG. 13 is a block diagram of an apparatus for processing an AF session according to an exemplary embodiment. As illustrated in FIG. 13, the apparatus 200 for processing an AF session includes a receiving unit 201.

The receiving unit 201 is configured to obtain a first request, the first request being configured to request to reserve a resource for an AF session, the first request including parameter information of a group of UEs, and the group of UEs including one or more UEs.

In an implementation, the first request is carried in a request for creating an application function session with QoS.

In an implementation, the receiving unit 201 is configured to perform authorization on the request for creating an application function session with QoS mapped to the group of UEs.

In an implementation, the apparatus 200 further includes: a sending unit 202. The sending unit 202 is configured to: in response to the authorization of the request for creating an application function session with QoS being successful, send an application policy authorization request for performing authorization on the request for creating an application function session with QoS, the application policy authorization request including the parameter information of the group of UEs.

In an implementation, the receiving unit 201 is configured to receive an application policy authorization response mapped to the group of UEs.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

FIG. 14 is a block diagram of an apparatus for processing an AF session according to an exemplary embodiment. As illustrated in FIG. 14, the apparatus 300 for processing an AF session includes a receiving unit 301.

The receiving unit 301 is configured to obtain an application policy authorization request, the application policy authorization request being configured to request for performing authorization on a request for creating an application function session with QoS, the application policy authorization request including parameter information of a group of UEs, and the group of UEs including one or more UEs.

In an implementation, the receiving unit 301 is further configured to: in response to the authorization being successful, determine a QoS parameter set mapped to the group of UEs.

In an implementation, the application policy authorization request includes an alternative service requirement, and the alternative service requirement includes one or more QoS reference parameter sets mapped to the group of UEs.

In an implementation, the receiving unit 301 is configured to: in response to the authorization being successful, determine a QoS parameter set from the one or more QoS reference parameter sets.

In an implementation, the apparatus 300 for processing an AF session further includes: a sending unit 302. The sending unit 302 is configured to: send an application policy authorization response mapped to the group of UEs.

In an implementation, the parameter information of the group of UEs includes at least one of:
addresses list of the group of UEs;
one or more flow descriptions mapped to the group of UEs; and
QoS references mapped to the group of UEs.

In an implementation, the parameter information of the group of UEs includes an alternative service requirement, and the alternative service requirement includes one or more QoS reference parameter sets mapped to the group of UEs.

Regarding the apparatus in the above embodiment, the specific way in which each module performs its operation has been described in detail in the method embodiments, and will not be described in detail here.

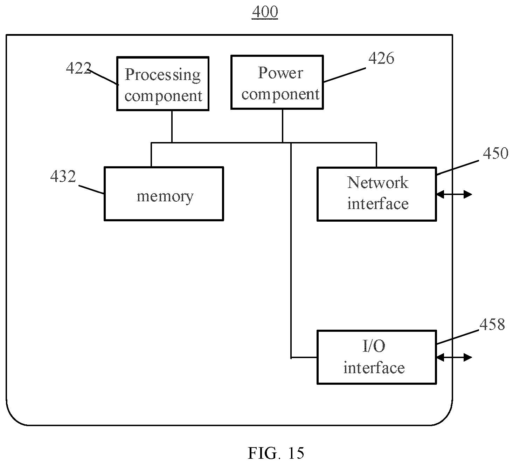

FIG. 15 is a block diagram of a device 400 for processing an AF session according to an exemplary embodiment.

For example, the device 400 may be provided as a server. As illustrated in FIG. 15, the device 400 includes a processing component 422 which further includes one or more processors, and memory resources represented by a memory 432 for storing instructions, such as application programs, that may be executed by the processing component 422. The application programs stored in the memory 432 may include one or more modules each corresponding to a set of instructions. The processing component 422 is configured to execute the instructions to perform the method described above.

The device 400 may also include a power component 426 configured to perform power management of the device 400, a wired or wireless network interface 450 configured to connect the device 400 to a network, and an input-output (I/O) interface 458. The device 400 may operate based on an operating system stored in the memory 432, such as Windows ServerTM, Mac OS XTM, UnixTM, LinuxTM, FreeBSDTM, or the like.

In the exemplary embodiment, there is also provided a non-transitory computer readable storage medium including instructions, such as the memory 432 including instructions. The instructions can be executed by the processing component 422 of the device 400 to implement the method described above. For example, the non-transitory computer readable storage medium may be a Random Only Memory (ROM), a Random Access Memory (RAM), a CD-ROM, a magnetic tape, a floppy disk, and an optical data storage device.

It is understood that the term "plurality" in the disclosure refers to two or more, which is similar to other quantifiers. The term "and/or" describes the relation of associated objects and indicates three relations. For example, A and/or B indicates the existence of A alone, the existence of A and B together, and the existence of B alone. The character "/" generally indicates that the associated objects before and after the character "/" is an "or" relation. The singular forms of "a", "said" and "the" are also intended to include plural forms, unless the context clearly indicates otherwise.

It is understood that the terms "first", "second", etc. are used to describe various types of information, but that such information should not be limited to these terms. These terms are used only to distinguish information of the same type and do not indicate a particular order or level of importance. In fact, the expressions "first" and "second" can be used interchangeably. For example, without departing from the scope of this disclosure, first information may also be referred to as second information, and similarly, second information may also be referred to as first information.

It is further understood that although the operations are depicted in the accompanying drawings in a particular order in the embodiments of the disclosure, this should not be construed as requiring the operations to be performed in the particular order shown or in serial order, or requiring that all of the operations shown to be performed to obtain the desired results. Multitasking and parallel processing may be advantageous in particular environments.

Other implementations of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for processing an application function session, performed by a first network device, comprising:
sending a first request, the first request being configured to request to reserve a resource for an application function session, the first request comprising parameter information of a group of User Equipments (UEs), and the group of UEs comprising one or more UEs.

2. The method of claim 1, wherein the first request is carried in a request for creating an application function session with quality.

3. The method of claim 1 or 2, wherein the parameter information of the group of UEs comprises at least one of:
addresses list of the group of UEs;
one or more flow descriptions mapped to the group of UEs; and
quality of service (QoS) references mapped to the group of UEs.

4. The method of claim 3, wherein the parameter information of the group of UEs comprises an alternative service requirement, and the alternative service requirement comprises one or more QoS reference parameter sets mapped to the group of UEs.

5. A method for processing an application function session, performed by a second network device, comprising:
obtaining a first request, the first request being configured to request to reserve a resource for an application function session, the first request comprising parameter information of a group of UEs, and the group of UEs comprising one or more UEs.

6. The method of claim 5, wherein the first request is carried in a request for creating an application function session with QoS.

7. The method of claim 6, further comprising:
performing authorization on the request for creating an application function session with QoS mapped to the group of UEs.

8. The method of claim 7, further comprising:
in response to the authorization of the request for creating an application function session with QoS being successful, sending an application policy authorization request for performing authorization on the request for creating an application function session with QoS, the application policy authorization request comprising the parameter information of the group of UEs.

9. The method of claim 8, further comprising:
receiving an application policy authorization response mapped to the group of UEs.

10. The method of any one of claims 5-9, wherein the parameter information of the group of UEs comprises at least one of:
addresses list of the group of UEs;
one or more flow descriptions mapped to the group of UEs; and
QoS references mapped to the group of UEs.

11. The method of claim 10, wherein the parameter information of the group of UEs comprises an alternative service requirement, and the alternative service requirement comprises one or more QoS reference parameter sets mapped to the group of UEs.

12. A method for processing an application function session, performed by a third network device, comprising:
obtaining an application policy authorization request, the application policy authorization request being configured to request for performing authorization on a request for creating an application function session with QoS, the application policy authorization request comprising parameter information of a group of UEs, and the group of UEs comprising one or more UEs.

13. The method of claim 12, further comprising:
in response to the authorization being successful, determining a QoS parameter set mapped to the group of UEs.

14. The method of claim 12 or 13, wherein the application policy authorization request comprises an alternative service requirement, and the alternative service requirement comprises one or more QoS reference parameter sets mapped to the group of UEs.

15. The method of claim 14, further comprising:
in response to the authorization being successful, determining a QoS parameter set from the one or more QoS reference parameter sets.

16. The method of any one of claims 12-15, further comprising:
sending an application policy authorization response mapped to the group of UEs.

17. The method of any one of claims 12-16, wherein the parameter information of the group of UEs comprises at least one of:
addresses list of the group of UEs;
one or more flow descriptions mapped to the group of UEs; and
QoS references mapped to the group of UEs.

18. The method of claim 17, wherein the parameter information of the group of UEs comprises an alternative service requirement, and the alternative service requirement comprises one or more QoS reference parameter sets mapped to the group of UEs.

19. An apparatus for processing an application function session, performed by a first network device, comprising:
a sending unit, configured to send a first request, the first request being configured to request to reserve a resource for an application function session, the first request comprising parameter information of a group of UEs, and the group of UEs comprising one or more UEs.

20. An apparatus for processing an application function session, performed by a second network device, comprising:
a receiving unit, configured to obtain a first request, the first request being configured to request to reserve a resource for an application function session, the first request comprising parameter information of a group of UEs, and the group of UEs comprising one or more UEs.

21. An apparatus for processing an application function session, performed by a third network device, comprising:
a receiving unit, configured to obtain an application policy authorization request, the application policy authorization request being configured to request for performing authorization on a request for creating an application function session with QoS, the application policy authorization request comprising parameter information of a group of UEs, the group of UEs comprising one or more UEs.

22. A device for processing an application function session, comprising:
a processor;
a memory for storing instructions executable by the processor; wherein
the processor is configured to perform the method for processing an application function session of any one of claims 1-4, or the method for processing an application function session of any one of claims 5-11, or the method for processing an application function session of any one of claims 12-18.

23. A non-transitory computer readable storage medium having instructions stored thereon that, when executed by a processor, cause a network device to perform the method for processing an application function session of any one of claims 1-4, or the method for processing an application function session of any one of claims 5 -11, or the method for processing an application function session of any one of claims 12-18.
